# EUROPEAN PATENT APPLICATION

(11) **EP 4 488 088 A1**
(43) Date of publication of application: **08.01.2025**
(21) Application number: 23182969.8
(22) Date of filing: 03.07.2023
(51) Int. Cl.: B60J 10/24, B60J 10/35

(54) **A SEALING DEVICE, A BODY PART, A SEALING ASSEMBLY AND A VEHICLE**

(71) Applicant: VOLVO TRUCK CORPORATION, 405 08 Göteborg (SE)
(72) Inventor: Ajesh, Vs, 560036 Bangalore (IN)
(74) Representative: Valea AB

(57) **Abstract**

A sealing device (1) for assembly with a vehicle body part (2). The sealing device (1) comprises a first side (10) configured to be glued to the vehicle body part (2) with which the sealing device (1) is intended to be assembled. The first side (10) comprises a first surface portion (12) covered by an adhesive (14). The first side (10) further comprises at least one first mating structure (16) configured to mate with at least one second mating structure (18) of the vehicle body part (2) with which the sealing device (1) is intended to be assembled. There is also disclosed a vehicle body part (2), a sealing assembly (3) and a vehicle (4) comprising the sealing assembly (3).

## Description

### TECHNICAL FIELD

The disclosure relates generally to sealing of body parts of a vehicle. In particular aspects, the disclosure relates to a sealing device, a body part, a sealing assembly comprising the sealing device and the body part and to a vehicle comprising the sealing assembly. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

During manufacturing and assembly of vehicles it is difficult to control the position and location of sealings used as primary and secondary sealings for doors, front lid seals, fender seals etc. In most of locations the rubber seals, such as ethylene propylene diene terpolymer (EPDM) seals are directly glued to panels because holes for fixation means are not allowed due to functional constraints such as water tightness, aesthetics etc. Therefore, an operator may have difficulties aligning the sealings in the assembly line. Alternatively, the operator may need to start over in order to correct a failed assembly of the sealing. This increases cycle time for manufacturing and may also lead to quality issues.

Conventionally, sealings are provided without any means for supporting and aligning the sealing in relation to a panel to which the sealing should be fixed. In one example, however, there is provided a sealing device comprising an adhesive means having an outer adhesive surface for adhering the sealing device to a body member. A plurality of protruding members are formed along the adhesive surface and the body member has receiving means adapted to receive the protruding members in order to aid location of the sealing device on the body member. The protruding members are designed to mate with holes in a sheet metal panel, such as a pillar of a door opening of an automobile. The holes risk water ingress. Further, the protruding members risk being damaged during handling and transportation of the sealing device.

### SUMMARY

According to a first aspect of the disclosure, there is provided a sealing device for assembly with a vehicle body part. The sealing device comprises a first side configured to be glued to the vehicle body part with which the sealing device is intended to be assembled. The first side comprises a first surface portion covered by an adhesive. The first side further comprises at least one first mating structure configured to mate with at least one second mating structure of the vehicle body part with which the sealing device is intended to be assembled.

The sealing device may be an elongated rubber seal. The first side of the sealing device may extend from a first end of the sealing device to the second end. The first surface portion may cover at least a portion of the first side. Thus, the adhesive may cover at least a portion of the first side. The first side comprises the first mating structure. As such, the first mating structure may be located within the first surface portion, or in a part of the first surface which is not covered by the first surface portion. The first mating structure may have a first shape configured to mate with a second shape of a second mating structure of a vehicle body part, with which vehicle body part the sealing device is intended to be assembled. The first mating structure may thus be a self-locating feature which cooperates with the second mating structure to align the sealing device quickly and correctly with the vehicle body part. The first mating structure also enables to provide a vehicle body part which is free from holes, such as through-holes, in a receiving surface of the vehicle body part. The receiving surface may be a surface of the vehicle body part which is configured to accommodate the sealing device.

Optionally in some examples, including in at least one preferred example, the at least one first mating structure is located separately from the first surface portion. A technical benefit may include easier alignment since the first mating structure may be matched with the second mating structure without hindering attachment of the sealing device using the adhesive of the first surface portion.

Optionally in some examples, including in at least one preferred example, the at least one first mating structure is arranged on an adhesive-free portion of the first side. A technical benefit may include easier alignment since the first mating structure may be matched with the second mating structure without hindering attachment of the sealing device using the adhesive of the first surface portion.

Optionally in some examples, including in at least one preferred example, the adhesive of the first surface portion is covered by a removable protective film prior to assembly with the vehicle body part. A technical benefit may include being able to align the sealing device correctly using the first mating structure and subsequently removing the protecting film and fixing the sealing device without having to lift the sealing device to remove the protective film. The protective film may be torn to enable removal of the protective film around the at least first mating structure without lifting the sealing device from the receiving surface.

Optionally in some examples, including in at least one preferred example, the sealing device has a first end and a second end and wherein the first surface portion extends continuously and uninterrupted on the first side, from the first end to the second end of the sealing device. The sealing device may be elongated and extend from the first end to the second end. Since the first surface portion may extend continuously and uninterrupted from the first end to the second end, the adhesive also extends continuously and uninterrupted from the first end to the second end. Thereby, the adhesive may be free from gaps and provides a water-tight interface between the sealing device and the receiving surface, from the first end to the second end of the sealing device. It is to be understood that in this example, the at least one first mating structure is shaped, sized and/or arranged such as to allow the first surface portion to extend around the at least one first mating structure on at least one side of the first mating structure.

Optionally in some examples, including in at least one preferred example, the first mating structure is integrally formed with the sealing device. The first mating structure may thus be formed and shaped during manufacturing of the sealing device. The first mating structure may thus be of the same material as the sealing device.

Optionally in some examples, including in at least one preferred example, the sealing device is an extruded rubber seal. When the first mating structure is integrally formed with the sealing device, the first mating structure may be an extruded structure of the sealing device.

Optionally in some examples, including in at least one preferred example, the sealing device is made of ethylene propylene diene terpolymer, EPDM. When the first mating structure is integrally formed with the sealing device, the first mating structure may be made of ethylene propylene diene terpolymer, EPDM.

Optionally in some examples, including in at least one preferred example, the at least one first mating structure comprises a protrusion configured to mate with the at least one second mating structure of the vehicle body part with which the sealing device is intended to be assembled. The first mating structure may thus protrude from the first side of the sealing device.

Optionally in some examples, including in at least one preferred example, the at least one first mating structure comprises a recession configured to mate with the at least one second mating structure of the vehicle body part with which the sealing device is intended to be assembled. The first mating structure may thus be a recession in the first side of the sealing device.

According to a second aspect of the disclosure, there is provided a vehicle body part for assembly with the sealing device according to anyone of the examples of the first aspect of the disclosure. The vehicle body part comprises a receiving surface configured to accommodate the sealing device. The receiving surface comprises the at least one second mating structure configured to match the at least one first mating structure of the sealing device with which the vehicle body part is intended to be assembled. The first mating structure and the second mating structure enable to provide the vehicle body part with a receiving surface which is free from holes, such as through-holes. The receiving surface may be a surface of the vehicle body part which is configured to accommodate the sealing device, i.e. the surface of the vehicle body part on which the sealing device is fixed by application of the adhesive of the first surface portion of the first side of the sealing device.

Optionally in some examples, including in at least one preferred example, the at least one second mating structure comprises a recession configured to mate with the protrusion of the at least one first mating structure of the sealing device. The second mating structure may thus be a recession in the receiving surface of the vehicle body part.

Optionally in some examples, including in at least one preferred example, the at least one second mating structure comprises a protrusion configured to mate with the recession of the at least one first mating structure of the sealing device. The second mating structure may thus protrude from the receiving surface of the vehicle body part.

Optionally in some examples, including in at least one preferred example, the vehicle body part is made of sheet metal. Accordingly, the second mating structure may be integrally formed with the vehicle body part. Consequently, the second mating structure may be a structure formed in the sheet metal.

Optionally in some examples, including in at least one preferred example, the receiving surface is free from through-holes. The absence of through holes, especially in a sheet metal vehicle body part, provides better protection against water-leakage and against corrosion of the sheet metal.

According to a third aspect of the disclosure, there is provided a sealing assembly comprising the sealing device according to anyone of the examples of the first aspect of the disclosure and the vehicle body part according to anyone of the examples of the second aspect of the disclosure. The at least one first mating structure of the sealing device mates with the at least one second mating structure of the vehicle body part and the first side of the sealing device is glued to the receiving surface of the vehicle body part by the adhesive of the first surface portion. The third aspect of the disclosure may seek to provide a water-tight sealing assembly which is easy to assemble quickly and correctly.

According to a fourth aspect of the disclosure, there is provided a vehicle comprising the sealing assembly according to the third aspect of the disclosure. The vehicle body part according to anyone of examples of the second aspect of the disclosure is a body part of the vehicle. The fourth aspect of the disclosure may seek to provide a vehicle having water-tight seals between vehicle body parts, and which vehicle is easy to assemble quickly and correctly.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example of the fourth aspect of the disclosure.
**FIG. 2** is an exemplary sealing assembly according to an example of the third aspect of the disclosure.
**FIG. 3** is an exemplary prior art sealing device.
**FIG. 4** is an exemplary sealing device.
**FIG. 5a-5c** are exemplary sealing devices according to examples of the first aspect of the disclosure.
**FIG. 6a-6c** are exemplary sealing devices according to examples of the first aspect of the disclosure.
**FIG. 7** is an exemplary vehicle body part according to an example of the second aspect of the disclosure.
**FIG. 8** is an exemplary sealing assembly according to an example of the third aspect of the disclosure.
**FIG. 9** is an exemplary sealing assembly according to an example of the third aspect of the disclosure.

### DETAILED DESCRIPTION

The detailed description set forth below provides information and examples of the disclosed technology with sufficient detail to enable those skilled in the art to practice the disclosure.

Difficulties aligning seals with vehicle body parts during manufacturing and assembly of vehicles increases cycle times and leads to issues with quality and to higher costs per produced unit. The present disclosure provides an improved sealing device and an improved vehicle body part, which lead to improved sealing assemblies comprising the sealing devices and vehicle body parts, such that the sealing assemblies are quick and easy to correctly assemble. With such improved sealing assemblies, vehicles comprising the sealing assemblies are also easier to assemble and manufacture.

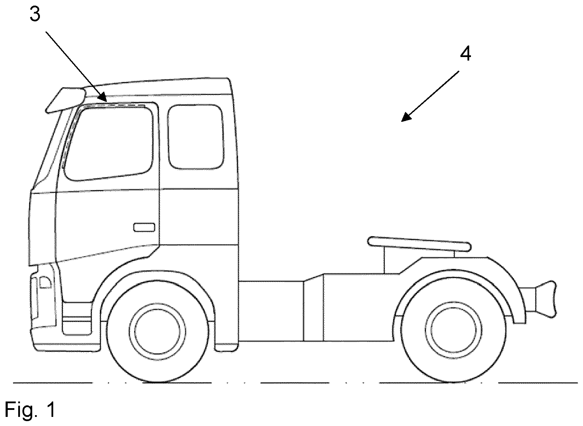

**Fig. 1** is an exemplary vehicle 4 according to an example of the fourth aspect of the disclosure. The vehicle 4 comprises sealing assembly 3 according to the third aspect of the disclosure. The disclosure can be applied to heavy-duty vehicles 4, such as trucks, buses, and construction equipment, among other vehicle types.

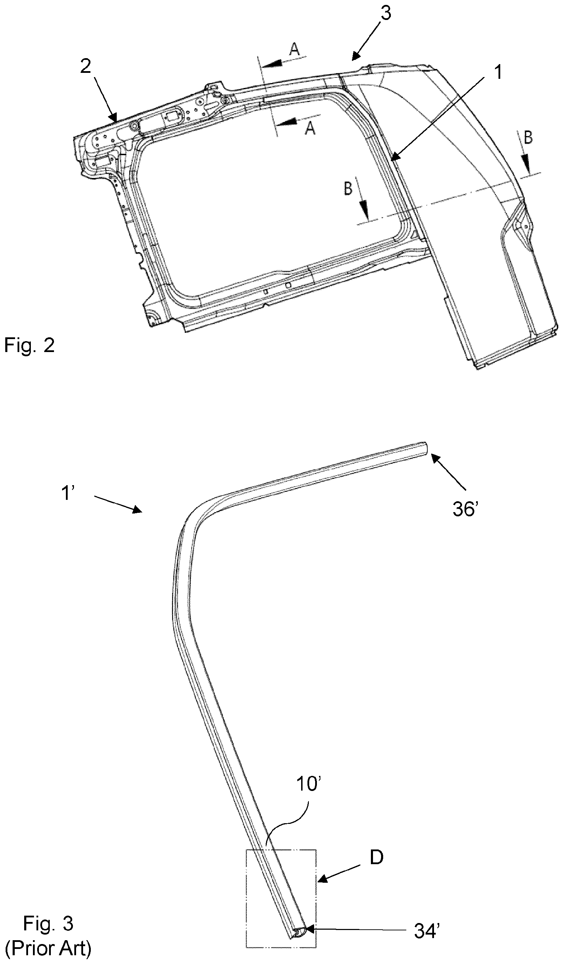

**Fig. 2** shows the sealing assembly 3 which in turn comprises a sealing device 1 according to the first aspect of the disclosure and a vehicle body part 2 according to the second aspect of the disclosure. The sealing device 1 is intended to provide a water-tight seal between two vehicle body parts 2. To this end, the sealing device is intended to be fixed to one vehicle body part 2, as shown in **Fig. 2****,** forming the sealing assembly 3. The sealing assembly may then be mounted or assembled with another vehicle body part 2 to form the water-tight seal between those vehicle body parts 2. Section A and section B shown in **Fig. 2** will be used hereinbelow to describe and exemplify properties of the aspects of the disclosure.

**Fig. 3** shows a prior art sealing device 1' having a first side 101 and having a first end 34' and a second end 36'. The first end 34' corresponds to section B of **Fig. 2** and the second end corresponds to section A of **Fig. 2****.** The first side 10' of the illustrated prior art sealing device 1' is smooth. Aligning the prior art sealing device 1' with a vehicle body part with which it is intended to be assembled may thus be a difficult task. The longer, or the more complex the shape of the sealing device, the more difficult assembly will be. The sealing device 1' may alternatively have other lengths and/or shapes.

Detail D will be used herein to describe and exemplify a corresponding sealing device 1 according to the first aspect of the present disclosure.

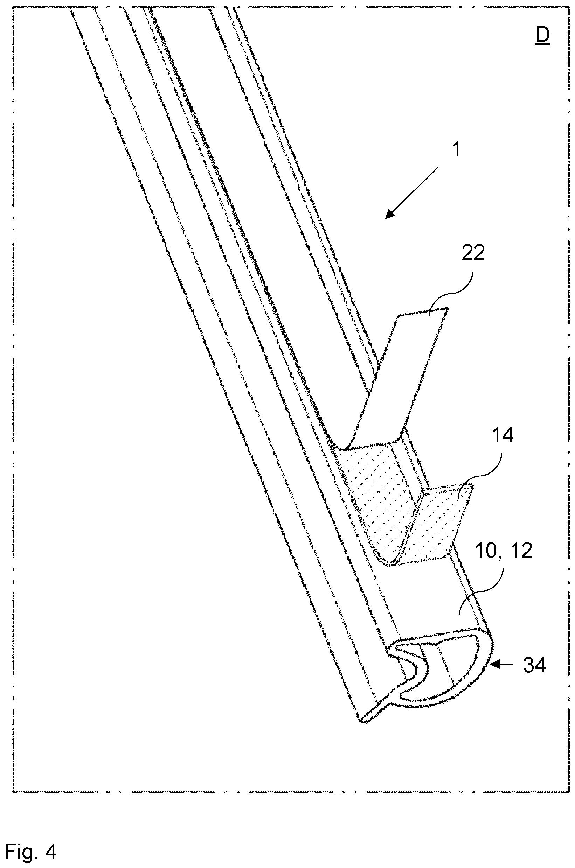

**Fig. 4** shows the detail D as applied to the sealing device 1 of the present disclosure. The sealing device comprises a first side 10 configured to be glued to a vehicle body part 2 with which the sealing device 1 is intended to be assembled. The first side 10 comprises a first surface portion 12 covered by an adhesive 14. The adhesive 14 of the first surface portion 12 may be covered by a removable protective film 22 prior to assembly with the vehicle body part 2. For clarity in illustrating the first side 10, the first surface portion 12, the adhesive 14 and the protective film 22, the first side 10 is shown as having a smooth surface. In the example of **Fig. 4****,** the first surface portion covers the entire visible first side 10. Also for clarity, the adhesive 14 is shown as partially delaminated from the first end 34 of the first surface portion 12 of the first side 10. Obviously, however, the adhesive 14 is, in practice, permanently fixed to the first surface portion 12.

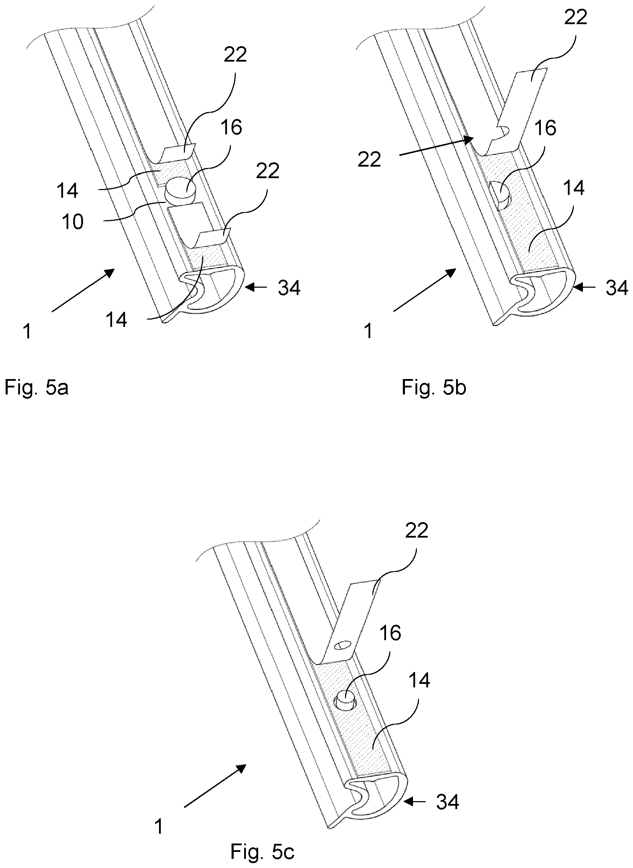

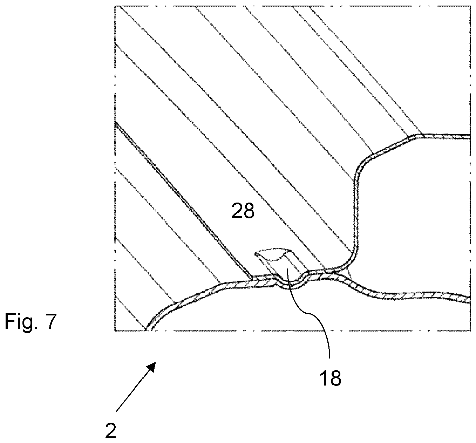

**Figs 5a-5c** show the part of detail D of the sealing device 1 according to the first aspect of the disclosure. The sealing device 1 is for assembly with a vehicle body part 2. The sealing device 1 comprises the first side 10 (exposed and shown in **Fig. 5a**) configured to be glued to the vehicle body part 2 with which the sealing device 1 is intended to be assembled. The first side 10 comprises a first surface portion 12 (not shown) covered by the adhesive 14. The first side 10 further comprises at least one first mating structure 16 configured to mate with at least one second mating structure 18 (see **Figs 7-9**) of the vehicle body part 2 with which the sealing device 1 is intended to be assembled.

As mentioned hereinabove, the sealing device 1 may be an elongated rubber seal. The first side 10 of the sealing device 1 may extend from the first end 34 of the sealing device 1 to the second end 36. The first surface portion 12 may cover at least a portion of the first side 10. Thus, the adhesive 14 may cover at least a portion of the first side 10. The first side 10 comprises the at least one first mating structure 16. As such, the first mating structure 16 may be located on the first side 10 within the first surface portion 12, or in a part of the first side 10 which is not covered by the first surface portion 12. The first mating structure 16 may have a first shape configured to mate with a second shape of a second mating structure 18 (not shown in **Figs 5a-5c**) of a vehicle body part 2, with which vehicle body part 2 the sealing device 1 is intended to be assembled. The first mating structure 16 may thus be a self-locating feature which cooperates with the second mating structure 18 to align the sealing device 1 quickly and correctly with the vehicle body part 2. The first mating structure also enables the provision of a vehicle body part 2 which is free from holes, such as through-holes, in a receiving surface 28 (shown in **Fig. 7**) of the vehicle body part 2. The receiving surface 28 may be a surface of the vehicle body part 2 which is configured to accommodate the sealing device 1.

**Fig. 5a** exemplifies how the at least first mating structure 16 may be located separately from the first surface portion 12, which first surface portion is covered by the adhesive 14. It is to be understood that the first surface portion is implicitly present in **Figs 5a-5c** under the adhesive 14, i.e. the first surface portion 12 is covered by the adhesive 14. The first mating structure 16 is in **Fig. 5a** located on the first side 10 between two parts of the first surface portion 12. Each part of the surface portion 12 and the adhesive 14 may be covered by the removable protective film 22. The first mating structure 16 may thereby be aligned and matched with the second mating structure 18 without hindering subsequent attachment of the sealing device 1 by removing the protective film 22 and pressing the first surface 10 against the receiving surface 28 of the vehicle body part 2. In the example of Fig. 5a, the attachment of the sealing device 1 may be carried out in steps, such as by aligning the first mating structures 16 with second mating structures 18 and attaching one part of the first surface portion 12 at a time.

**Fig. 5b** and **Fig. 5c** show how the at least one first mating structure 16 may be arranged on an adhesive-free portion of the first side 10. The first mating structure 16 is thereby separate from the protective film 22 which covers the adhesive 14.

**Fig. 5b** and **Fig. 5c** also show how the first surface portion 12 (with the adhesive 14) extends continuously and uninterrupted on the first side 10, from the first end 34 to the second end 36 (not shown in the detail D) of the sealing device. The sealing device 1 may be elongated and extend from the first end 34 to the second end 36. Since the first surface portion 12 may extend continuously and uninterrupted from the first end to the second end, the adhesive 14 may also extend continuously and uninterrupted from the first end 34 to the second end 36. Thereby, the adhesive 14 may be free from gaps and provides a water-tight interface between the sealing device 1 and the receiving surface 28, from the first end 34 to the second end 36 of the sealing device 1. It is to be understood that in the examples of **Fig. 5b** and **Fig. 5c****,** the at least one first mating structure 16 is shaped, sized and/or arranged such as to allow the first surface portion 12 to extend around the at least one first mating structure 16 on at least one side of the first mating structure 16. In **Fig. 5b****,** the first surface portion 12 is shown to extend on one side of the first mating structure 16, which is shown arranged on an edge of the first side 10. **Fig. 5c** exemplifies how the first surface portion 12 may extend around the first mating structure 16 and how the first mating structure 16 may be surrounded by the first surface portion 12 and the adhesive 14. The protective film 22 may be torn to enable removal of the protective film 22 around the at least first mating structure 16 without lifting the sealing device 1 from the receiving surface 28.

The first mating structure 16 may be integrally formed with the sealing device 1. The first mating structure 16 may thus be formed and shaped during manufacturing of the sealing device 1. The first mating structure 16 may be of the same material as the sealing device 1. The sealing device 1 may be an extruded rubber seal. When the first mating structure 16 is integrally formed with the sealing device 1, the first mating structure 16 may then be an extruded rubber structure of the sealing device 1. The sealing device may be made of ethylene propylene diene terpolymer, EPDM. Thereby, when the first mating structure 16 is integrally formed with the sealing device 1, the first mating structure 16 is also made of ethylene propylene diene terpolymer, EPDM.

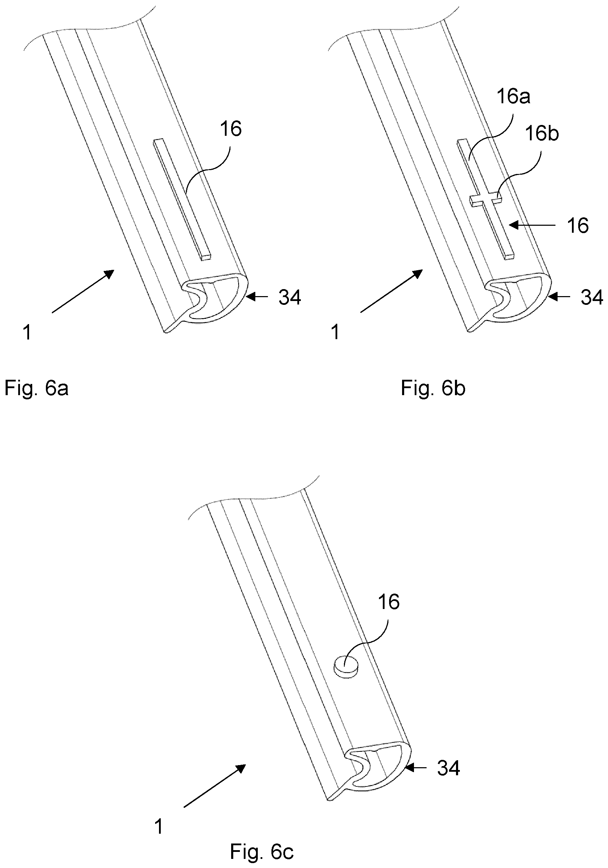

**Figs 6a-6c** are exemplary sealing devices 1 illustrating examples of the first aspect of the disclosure. The first mating structure 16 may have different shapes and may match the second mating structures 18 which are correspondingly shaped. A plurality of first mating structures 16 may comprise different individual shapes. **Fig. 6a** shows a first mating structure 16 having an elongate shape parallel with an extension of the sealing device 1. **Fig. 6b** shows a first mating structure 16 comprising both a longitudinal component 16a and a lateral component 16b. **Fig. 6c** shows a first mating structure 16 having a circular shape.

The at least one first mating structure 16 may comprise a protrusion configured to mate with the at least one second mating structure 18 of the vehicle body part 2 with which the sealing device 1 is intended to be assembled. The first mating structure 16 may thus protrude from the first side 10 of the sealing device 1.

Alternatively, the at least one first mating structure 16 may comprise a recession configured to mate with the at least one second mating structure 18 of the vehicle body part 2 with which the sealing device 1 is intended to be assembled. The first mating structure 16 may thus be a recession in the first side 10 of the sealing device 1.

A plurality of first mating structures 16 may comprise at least one first mating structure formed as a protrusion and at least one first mating structure 16 formed as a recession. The plurality of first mating structures 16 may then be configured to mate with a plurality of second mating structures 18 formed as corresponding recessions and protrusions, respectively.

**Fig. 7** shows a detail of a vehicle body part 2 according to the second aspect of the disclosure. The vehicle body part 2 comprises a receiving surface 28 configured to accommodate the sealing device 1. The receiving surface 28 comprises the at least one second mating structure 18 configured to match the at least one first mating structure 16 of the sealing device 1 with which the vehicle body part 2 is intended to be assembled. The first mating structure 16 and the second mating structure 18 enable to provide the vehicle body part 2 with a receiving surface 28 which is free from holes, such as through-holes. The receiving surface 28 may be a surface of the vehicle body part 2 which is configured to accommodate the sealing device 1, i.e. the surface of the vehicle body part 2 on which the sealing device 1 is fixed by application of the adhesive 14 of the first surface portion 12 of the first side 10 of the sealing device 1. As an example, when assembled in a vehicle 4, one vehicle body part 2, such as a door, may be assembled with another vehicle body part comprising a frame having the sealing device 1. The door and frame may be openable with regard to the frame. When closed, the door forms a water-tight seal with the frame due to the provision of the sealing device 1.

The at least one second mating structure 18 may comprise a recession configured to mate with a protrusion of the at least one first mating structure 16 of the sealing device 1. The second mating structure 18 may thus be a recession in the receiving surface 28 of the vehicle body part 2.

Alternatively, the at least one second mating structure 18 may comprise a protrusion configured to mate with a recession of the at least one first mating structure 16 of the sealing device 1. The second mating structure 18 may thus protrude from the receiving surface 28 of the vehicle body part 2.

The vehicle body part 2 may be made of sheet metal. The second mating structure 18 may be integrally formed with the vehicle body part 2. Consequently, the second mating structure 18 may be a structure formed in the sheet metal. Due to the sealing device 1 and the vehicle body part 2 of the present disclosure, the receiving surface 28 may be free from through-holes. The absence of through holes, especially in a sheet metal vehicle body part 2, provides better protection against water-leakage and against corrosion of the sheet metal.

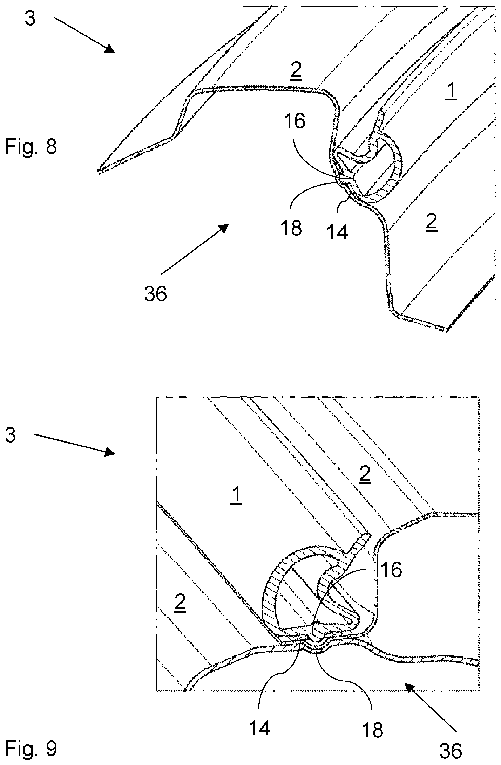

**Fig. 8** and **Fig. 9** show a sealing assembly 3 according to the third aspect of the disclosure. **Fig. 8** depicts the second end 36 of the sealing device 1 as indicated by the section A in **Fig. 2** and **Fig. 9** depicts the first end 34 of the sealing device 1 as indicated by the section B in **Fig. 2****.** The sealing assembly 2 comprises the sealing device 1 according to anyone of the examples of the first aspect of the disclosure and the vehicle body part 2 according to anyone of the examples of the second aspect of the disclosure. The at least one first mating structure 16 of the sealing device 1 mates with the at least one second mating structure 18 of the vehicle body part 2 and the first side 10 of the sealing device 1 is glued to the receiving surface 28 of the vehicle body part 2 by the adhesive 14 of the first surface portion 12. The sealing assembly 3 provides a water-tight assembly which is easy to assemble quickly and correctly.

### Examples

Example 1: A sealing device (1) for assembly with a vehicle body part (2), the sealing device (1) comprising a first side (10) configured to be glued to the vehicle body part (2) with which the sealing device (1) is intended to be assembled, the first side (10) comprising a first surface portion (12) covered by an adhesive (14), and wherein the first side (10) further comprises at least one first mating structure (16) configured to mate with at least one second mating structure (18) of the vehicle body part (2) with which the sealing device (1) is intended to be assembled.
Example 2: The sealing device (1) of claim 1, wherein the at least one first mating structure (16) is located separately from the first surface portion (12).
Example 3: The sealing device (1) of claim 1, wherein the at least one first mating structure (16) is arranged on an adhesive-free portion of the first side (10).
Example 4: The sealing device (1) of anyone of the previous claims, wherein the adhesive (14) of the first surface portion (12) is covered by a removable protective film (22) prior to assembly with the vehicle body part (2).
Example 5: The sealing device (1) of anyone of the previous claims, wherein the sealing device (1) has a first end (34) and a second end (36) and wherein the first surface portion (12) extends continuously and uninterrupted on the first side (10), from the first end (34) to the second end (36) of the sealing device (1).
Example 6: The sealing device (1) of anyone of the previous claims, wherein the first mating structure (16) is integrally formed with the sealing device (1).
Example 7: The sealing device (1) of anyone of the previous claims, wherein the sealing device (1) is an extruded rubber seal.
Example 8: The sealing device (1) of claim 7, wherein the sealing device (1) is made of ethylene propylene diene terpolymer, EPDM.
Example 9: The sealing device (1) of anyone of the previous claims, wherein the at least one first mating structure (16) comprises a protrusion configured to mate with the at least one second mating structure (18) of the vehicle body part (2) with which the sealing device (1) is intended to be assembled.
Example 10: The sealing device (1) of anyone of the previous claims, wherein the at least one first mating structure (16) comprises a recession configured to mate with the at least one second mating structure (18) of the vehicle body part with which the sealing device (1) is intended to be assembled.
Example 11: A vehicle body part (2) for assembly with the sealing device (1) according to anyone of the previous claims, wherein the vehicle body part (2) comprises a receiving surface (28) configured to accommodate the sealing device (1) and wherein the receiving surface (28) comprises the at least one second mating structure (18) configured to match the at least one first mating structure (16) of the sealing device (1) with which the vehicle body part (2) is intended to be assembled.
Example 12: The vehicle body part (2) of claim 11 when dependent on claim 9, wherein the at least one second mating (18) structure comprises a recession configured to mate with the protrusion of the at least one first mating structure (16) of the sealing device (1).
Example 13: The vehicle body part (2) of claim 11 or 12 when dependent on claim 10, wherein the at least one second mating structure (18) comprises a protrusion configured to mate with the recession of the at least one first mating structure (16) of the sealing device (1).
Example 14: The vehicle body part (2) of anyone of claims 11-13, wherein the vehicle body part (2) is made of sheet metal.
Example 16: The vehicle body part (2) of anyone of claims 11-14, wherein the receiving surface (28) is free from through-holes.
Example 16: A sealing assembly (3) comprising the sealing device (1) according to anyone of claims 1-10 and the vehicle body part (2) according to anyone of claims 11-15, wherein the at least one first mating structure (16) of the sealing device (1) mates with the at least one second mating structure (18) of the vehicle body part (2) and wherein the first side (10) of the sealing device (1) is glued to the receiving surface (28) of the vehicle body part (2) by the adhesive (14) of the first surface portion (12).
Example 17: A vehicle (4) comprising the sealing assembly (3) according to claim 16, wherein the vehicle body part (2) according to anyone of claims 11-15 is a body part of the vehicle (4).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A sealing device (1) for assembly with a vehicle body part (2), the sealing device (1) comprising a first side (10) configured to be glued to the vehicle body part (2) with which the sealing device (1) is intended to be assembled, the first side (10) comprising a first surface portion (12) covered by an adhesive (14), and
wherein the first side (10) further comprises at least one first mating structure (16) configured to mate with at least one second mating structure (18) of the vehicle body part (2) with which the sealing device (1) is intended to be assembled.

2. The sealing device (1) of claim 1, wherein the at least one first mating structure (16) is located separately from the first surface portion (12).

3. The sealing device (1) of claim 1, wherein the at least one first mating structure (16) is arranged on an adhesive-free portion of the first side (10).

4. The sealing device (1) of anyone of the previous claims, wherein the adhesive (14) of the first surface portion (12) is covered by a removable protective film (22) prior to assembly with the vehicle body part (2).

5. The sealing device (1) of anyone of the previous claims, wherein the sealing device (1) has a first end (34) and a second end (36) and wherein the first surface portion (12) extends continuously and uninterrupted on the first side (10), from the first end (34) to the second end (36) of the sealing device (1).

6. The sealing device (1) of anyone of the previous claims, wherein the first mating structure (16) is integrally formed with the sealing device (1).

7. The sealing device (1) of anyone of the previous claims, wherein the sealing device (1) is an extruded rubber seal.

8. The sealing device (1) of anyone of the previous claims, wherein the at least one first mating structure (16) comprises a protrusion configured to mate with the at least one second mating structure (18) of the vehicle body part (2) with which the sealing device (1) is intended to be assembled.

9. The sealing device (1) of anyone of the previous claims, wherein the at least one first mating structure (16) comprises a recession configured to mate with the at least one second mating structure (18) of the vehicle body part with which the sealing device (1) is intended to be assembled.

10. A vehicle body part (2) for assembly with the sealing device (1) according to anyone of the previous claims, wherein the vehicle body part (2) comprises a receiving surface (28) configured to accommodate the sealing device (1) and wherein the receiving surface (28) comprises the at least one second mating structure (18) configured to match the at least one first mating structure (16) of the sealing device (1) with which the vehicle body part (2) is intended to be assembled.

11. The vehicle body part (2) of claim 10 when dependent on claim 8, wherein the at least one second mating (18) structure comprises a recession configured to mate with the protrusion of the at least one first mating structure (16) of the sealing device (1).

12. The vehicle body part (2) of claim 10 or 11 when dependent on claim 9, wherein the at least one second mating structure (18) comprises a protrusion configured to mate with the recession of the at least one first mating structure (16) of the sealing device (1).

13. The vehicle body part (2) of anyone of claims 10-12, wherein the receiving surface (28) is free from through-holes.

14. A sealing assembly (3) comprising the sealing device (1) according to anyone of claims 1-9 and the vehicle body part (2) according to anyone of claims 10-13, wherein the at least one first mating structure (16) of the sealing device (1) mates with the at least one second mating structure (18) of the vehicle body part (2) and wherein the first side (10) of the sealing device (1) is glued to the receiving surface (28) of the vehicle body part (2) by the adhesive (14) of the first surface portion (12).

15. A vehicle (4) comprising the sealing assembly (3) according to claim 14.
